# EUROPEAN PATENT SPECIFICATION

(11) **EP 3 869 634 B1**
(45) Date of publication and mention of the grant of the patent: **18.01.2023**
(21) Application number: 20158464.6
(22) Date of filing: 20.02.2020
(51) Int. Cl.: H01R 24/54, B29C 45/14, H01R 24/44, B29C 45/00, H01R 43/24, H01R 9/05, H01R 13/405, H01R 13/6474

(54) **COAXIAL CONNECTOR**
KOAXIALSTECKER
CONNECTEUR COAXIAL

(43) Date of publication of application: 25.08.2021
(73) Proprietor: Rohde & Schwarz GmbH & Co. KG, 81671 München (DE)
(72) Inventor: Huber, Rupert, 81671 München (DE); Sterns, Michael, 81671 München (DE); Raith, Andreas, 81671 München (DE)
(74) Representative: Prinz & Partner mbB

(56) References cited:
- EP-A2- 3 319 183
- GB-A- 2 323 721
- US-A- 5 863 226
- US-A- 6 113 431
- US-A1- 2018 294 608
- US-B1- 6 250 960

## Description

The invention relates to a coaxial connector comprising an inner conductor, an outer conductor and a first support mechanically locking the inner conductor within the outer conductor.

This connector serves for electrically connecting two coaxial cables. The connector is in particular adapted for complying with the IEEE standard 287 for precision coaxial connectors (DC to 110 GHz).

Generally speaking, the outer conductor is a hollow body formed from an electrically conductive material, in the interior of which the inner conductor is arranged which is a thin cylindrical body also formed from an electrically conductive material. The first support is made from an electrically isolating material and serves for reliably centering and holding the inner conductor within the outer conductor. The term "mechanically locking" here refers to a connection which holds the inner conductor with respect to the outer conductor in an axial direction and also prevents a rotation of the inner conductor with respect to the outer conductor.

It is known to form the first support by injection molding. For the injection molding process, the inner and the outer conductors are placed in a mold, and the first support is formed from an injection moldable material. Both the inner and the outer conductors are provided with a geometry which assists the mechanical lock to be achieved between the outer and the inner conductors.

Document US 6 250 960 B1 discloses the preamble of claim 1.

The object of the invention is to improve a coaxial connector as defined above, in particular in order to fulfill the high requirements for using the coaxial connector in an RF calibration kit. In particular, a coaxial connector which is a male-male adaptor shall be improved.

The improved coaxial connector is disclosed in claim 1.

The invention is based on the concept of improving the precision with which the inner conductor is arranged concentrically within the outer conductor. To do so, the second support is provided which is arranged in a distance from the first support near the respective end of the inner conductor, providing a support which is effective only in a radial direction. Other loads such as axial or rotational loads are supported by the first support. This allows forming the second support with very small dimensions, thus having a very small influence on the loss of the connector.

Preferably, the first support is formed from injection-molded material, in particular from a glass fiber reinforced liquid-crystal polymer (LCP). LCP allows forming the first support with very precise dimensions and a high mechanical stability.

According to the invention, the second support has a ring-shaped form. This geometry allows supporting high radial loads while at the same time requiring only very little material.

The second support can be made from a polyimide material so as to have little impact on the transmission properties of the connector.

A sufficient strength and rigidity of the second support can be achieved with a thickness of the second support in a range of 40 µm to 80 µm and preferable of approximately 75 µm. This very small thickness contributes to maintaining the good transmission properties of the connector.

According to an embodiment, the inner and/or outer conductor comprises an electrical compensation geometry for compensating a capacitive value of the first and/or second support, thereby allowing to maintain the desired transmission properties despite the addition of the second support.

The compensation geometry is a reduced cross-section at the position of the support. In cooperation with the first support, the recess can serve for mechanically locking the inner conductor within the outer conductor.

The reduced cross-section serves for elastically holding the second support within a recess formed by the reduced cross-section. No additional means are required for holding the second support in the desired position; it is sufficient to push the second support in an axial direction until it engages into the recess.

According to the invention, the second support has the form of a ring with an outer diameter which corresponds to the inner diameter of the outer conductor and an inner diameter which corresponds to the outer diameter of the recess formed at the inner conductor for receiving the second support, with the inner diameter being formed from a plurality of holding tabs separated by slots. The slots increase the elasticity of the second support so as to make it easier to axially push the second support onto the inner conductor until it elastically latches in the recess. The term "the diameter corresponds" here means that the diameter is either identical or slightly larger at the outer circumference and smaller at the inner circumference so as to achieve a slight press fit.

According to a preferred embodiment, the second support is arranged with a distance from the free end of the inner conductor which is between 20% and 40% of the length between the free end and the position of the first support. The position is a compromise between a good supporting effect on the one hand and a protected position in the interior of the outer connector on the other hand.

The invention will now be described with reference to an embodiment which is shown in the enclosed drawing. In the drawings,
- Figure 1 shows a coaxial connector in accordance with the invention in a cross-section; and
- Figure 2 shows at an enlarged scale the second support arranged between the outer conductor and the inner conductor.

The coaxial connector 2 is here a male-male adaptor which is adapted for receiving two complementary female connector parts at its ends which are opposite each other in an axial direction. Connector 2 comprises an outer conductor 4 which has a cylindrical cavity 6 extending in an axial direction through outer conductor 4. Arranged within cavity 6 is an inner conductor 8 which extends coaxially with the longitudinal axis of outer conductor 4.

Both the outer conductor 4 and the inner conductor 8 are made from an electrically conductive metal alloy, for example from beryllium copper. Both parts can be gold plated.

Outer conductor 4 carries additional components which are not relevant in terms of the invention, for example two connecting nuts 10 and a check nut 12.

The inner conductor 8 is held within the outer conductor 4 by means of a first support 14 and two second supports 16.

The first support 14 is formed by injecting an injection moldable material, for example glass fiber reinforced LCP, into an injection molding mold in which the outer conductor 4 and the inner conductor 8 are mounted. Particulars of the injection molding process and the geometry of first support 14 are not relevant. It is only important to understand that first support 14 serves for mechanically locking the inner conductor 8 within the outer conductor 4. To this end, the inner conductor is provided with a recess 18 into which the first support 14 engages, and the outer conductor 4 comprises a suitable geometry into which the first support 14 engages as well. This geometry here is formed by two injection molding passages 20 extending from an outer surface of outer conductor 4 into cavity 6.

Because of the mechanical locking effect of the first support 14, the inner conductor 8 is held fixedly within the outer conductor 4. Accordingly, the first support 14 is adapted for receiving axial loads acting on the inner conductor 8, and also for holding the inner conductor 8 non-rotatably with respect to the outer conductor 4.

Recess 18 is shaped such that it compensates for the capacitive value of the first support 14.

The second supports 16 are arranged between the first support 14 and the respective end of the inner conductor 8. They serve for supporting radial loads acting on the inner conductor 8 so as to prevent deflections of the inner conductor 8.

Each of the second supports 16 is made from a polyimide material and has a thickness in the range of 40 µm to 80 µm, in particular of approximately 75 µm.

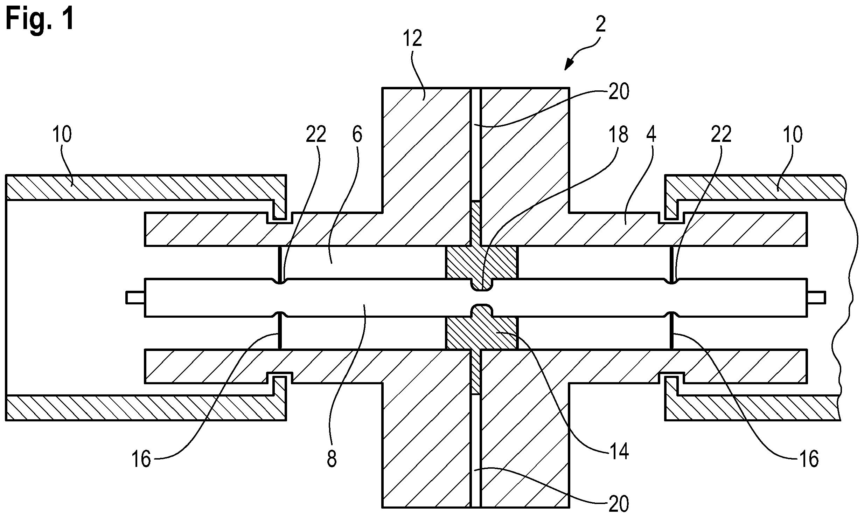

As can be seen in Figure 1, each of the second supports 16 is arranged with a distance from the first support 14 so as to reduce the length with which the ends of the inner conductor 8 project freely beyond the second support. Here, each of the second supports 16 is arranged at a distance from the free end of the inner conductor 8 which is between 20% and 40% of the length between the free end and the position of the first support 14.

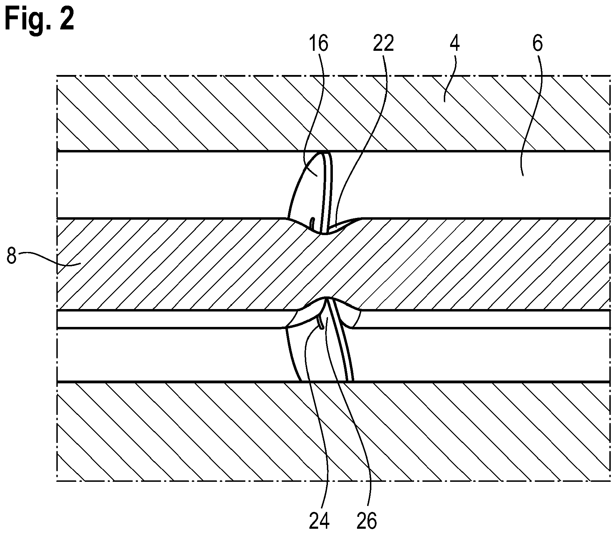

Each second support 16 has the shape of a flat ring or disc (please see also Figure 2) with an outer diameter which corresponds to the inner diameter of the outer conductor 4. In practice, the outer diameter of the second support 16 can be slightly larger than the inner diameter of the outer conductor 4 so as to achieve a press fit.

At the position where the second supports shall be placed, the cross-section of the inner conductor is reduced or constricted so as to obtain a recess 22. The purpose of recess 22 is to mechanically hold the second support 16 in its axial position and to compensate for the capacitive value of the second support 16.

A plurality of radially extending slots 24 is provided at the inner circumference of each of the second supports 16, with each pair of adjacent slots 24 forming a holding tab 26 between them. Holding tabs 26 are elastic so that the inner opening of each of the ring-shaped second supports 16 can be enlarged for pushing the second support 16 in an axial direction onto the inner conductor 8. As soon as recess 22 is reached, the holding tabs 26 elastically return to their original position, thereby mechanically holding the second support 16 at the desired position.

For manufacturing the coaxial connector, the outer conductor 4 and the inner conductor 8 are placed in a mold, and the first support 14 is created by injection molding. In a subsequent step, the second supports 16 are inserted in an axial direction until the holding tabs 26 snap into the respective recess 22.

## Claims

1. A coaxial connector comprising an inner conductor (8), an outer conductor (4) having a cylindrical cavity (6) extending in an axial direction through said outer conductor (4), a first support (14) mechanically locking the inner conductor (8) within the outer conductor (4), and at least one second support (16) arranged between the first support (14) and one of the ends of the inner conductor (8),
wherein the second support (16) is effective in a radial direction only; and
wherein the inner conductor (8) comprises an electrical compensation geometry (22) for compensating a capacitive value of the second support (16),
**characterized by**
the compensation geometry (22) being a reduced cross-section at the position of the second support (16), and wherein the second support (16) is elastically held within a recess (22) formed by the reduced cross-section, and the second support (16) has the form of a ring with an outer diameter which corresponds to the inner diameter of the outer conductor (4) and an inner diameter which corresponds to the outer diameter of the recess (22) formed at the inner conductor (8) for receiving the second support (16), with the inner diameter of the second support (16) being formed from a plurality of holding tabs (26) separated by slots (24).

2. The connector of claim 1 wherein the first support (14) is formed from injection-molded material, in particular from a glass fiber reinforced liquid-crystal polymer (LCP).

3. The connector of claim 2 wherein the second support (16) is made from a polyimide material.

4. The connector of claim 2 or claim 3 wherein the second support (16) has a thickness of 40 to 80 µm.

5. The connector of any of the preceding claims wherein the second support (16) is arranged with a distance from the free end of the inner conductor (8) which is between 20% and 40% of the length between the free end and the position of the first support (14).

## Patentansprüche

1. Koaxialverbinder, der einen Innenleiter (8), einen Außenleiter (4) mit einem zylindrischen Hohlraum (6), der sich in einer Axialrichtung durch den Außenleiter (4) erstreckt, eine erste Stütze (14), die den Innenleiter (8) im Außenleiter (4) mechanisch verriegelt, und mindestens eine zweite Stütze (16), die zwischen der ersten Stütze (14) und einem der Enden des Innenleiters (8) angeordnet ist, umfasst,
wobei die zweite Stütze (16) nur in einer Radialrichtung effektiv ist; und
wobei der Innenleiter (8) eine elektrische Kompensationsgeometrie (22) zum Kompensieren eines kapazitiven Wertes der zweiten Stütze (16) umfasst,
**dadurch gekennzeichnet, dass**
die Kompensationsgeometrie (22) in der Position der zweiten Stütze (16) einen reduzierten Querschnitt aufweist, wobei die zweite Stütze (16) elastisch in einer Ausnehmung (22) gehalten wird, die vom reduzierten Querschnitt gebildet wird, und die zweite Stütze (16) die Form eines Rings mit einem Außendurchmesser aufweist, der dem Innendurchmesser des Außenleiters (4) entspricht, und einem Innendurchmesser, der dem Außendurchmesser der Ausnehmung (22) entspricht, die am Innenleiter (8) zum Aufnehmen der zweiten Stütze (16) gebildet ist, wobei der Innendurchmesser der zweiten Stütze (16) aus einer Vielzahl von Haltelaschen (26), die durch Schlitze (24) getrennt sind, gebildet ist.

2. Verbinder nach Anspruch 1, wobei die erste Stütze (14) aus einem Spritzgussmaterial gebildet ist, insbesondere aus einem glasfaserverstärkten Flüssigkristallpolymer (LCP).

3. Verbinder nach Anspruch 2, wobei die zweite Stütze (16) aus einem Polyimidmaterial gebildet ist.

4. Verbinder nach Anspruch 2 oder Anspruch 3, wobei die zweite Stütze (16) eine Dicke von 40 bis 80 µm aufweist.

5. Verbinder nach einem der vorhergehenden Ansprüche, wobei die zweite Stütze (16) mit einem Abstand vom freien Ende des Innenleiters (8) angeordnet ist, der zwischen 20 % und 40 % der Länge zwischen dem freien Ende und der Position der ersten Stütze (14) beträgt.

## Revendications

1. Connecteur coaxial comprenant un conducteur intérieur (8), un conducteur extérieur (4) ayant une cavité cylindrique (6) s'étendant dans une direction axiale à travers ledit conducteur extérieur (4), un premier support (14) verrouillant mécaniquement le conducteur intérieur (8) à l'intérieur du conducteur extérieur (4), et au moins un deuxième support (16) agencé entre le premier support (14) et l'une des extrémités du conducteur intérieur (8),
dans lequel le deuxième support (16) est efficace dans une direction radiale uniquement ; et
dans lequel le conducteur intérieur (8) comprend une géométrie (22) de compensation électrique pour compenser une valeur capacitive du deuxième support (16),
**caractérisé en ce que**
la géométrie (22) de compensation est une section transversale réduite à la position du deuxième support (16),
dans lequel
le deuxième support (16) est maintenu élastiquement à l'intérieur d'un évidement (22) formé par la section transversale réduite, et le deuxième support (16) a la forme d'un anneau avec un diamètre extérieur qui correspond au diamètre intérieur du conducteur extérieur (4) et un diamètre intérieur qui correspond au diamètre extérieur de l'évidement (22) formé dans le conducteur intérieur (8) pour recevoir le deuxième support (16), le diamètre intérieur du deuxième support (16) étant formé d'une pluralité de pattes de maintien (26) séparées par des fentes (24).

2. Connecteur selon la revendication 1, dans lequel le premier support (14) est formé d'un matériau moulé par injection, en particulier d'un polymère à cristaux liquides (LCP) renforcé par des fibres de verre.

3. Connecteur selon la revendication 2, dans lequel le deuxième support (16) est réalisé en un matériau polyimide.

4. Connecteur selon la revendication 2 ou la revendication 3, dans lequel le deuxième support (16) a une épaisseur de 40 à 80 µm.

5. Connecteur selon l'une quelconque des revendications précédentes, dans lequel le deuxième support (16) est agencé à une distance de l'extrémité libre du conducteur intérieur (8) qui est comprise entre 20 % et 40 % de la longueur entre l'extrémité libre et la position du premier support (14).
